# EUROPEAN PATENT SPECIFICATION

(11) **EP 1 613 114 B1**
(45) Date of publication and mention of the grant of the patent: **08.09.2010**
(21) Application number: 04291692.4
(22) Date of filing: 02.07.2004
(51) Int. Cl.: H04W 36/14

(54) **Handover mechanism for mobile IP**
Mechanismus für das Weiterreichen für mobile IP-Protokolle
Mécanisme de transfert pour IP mobile

(43) Date of publication of application: 04.01.2006
(73) Proprietor: Alcatel Lucent, 75008 Paris (FR)
(72) Inventor: Lapraye, Bertrand, 91190 Gif sur Yvette (FR)
(74) Representative: Schmidt, Werner Karl

(56) References cited:
- EP-A- 0 888 026
- EP-A- 1 207 708
- WO-A-03/009624
- US-A1- 2003 069 018

## Description

### Field of the invention

The present invention relates to the field of mobile IP and in particular without limitation to a handover mechanism for mobile IP.

### Background and prior art

In a mobile network environment mobile nodes may arbitrarily change their point of attachment to the network. The mobile internet protocol (IP) architecture and protocols aim to maintain continuity of an IP session when a mobile node changes its attachment to the internet. In particular IP version 4 (IPv4) assumes that a node's IP address uniquely identifies the node's point of attachment to the internet. Therefore, a node must be located on the network indicated by its IP address in order to receive datagrams destined to it.

Mobile IP, such as mobile IPv4and mobile IPv6, are intended to enable nodes to move from one IP subnet to another. In general, it is suitable for mobility across homogeneous as well as heterogeneous networks. For example, mobile IP facilitates node movement from one Ethernet segment to another as well as it accommodates node movement from an Ethernet segment to a wireless LAN. Mobile nodes may comprise computing devices such as a host or a router that change their point of attachment from one network or sub network to another.

Hence, a mobile node may change its location without changing its IP address. It may continue to communicate with other internet nodes at any location by making use of its long term IP address.

Typically, a mobile node is given such a long term IP address with respect to a home network. This home address is administered in the same way as a permanent IP address that is provided to a stationary host. When away from its home network, a "care-of address" is associated with the mobile node and reflects the mobile node's current point of attachment.

The concept of mobile IP architecture further introduces home agents and foreign agents. The home agent serves as a router on a mobile node's home network that tunnels datagrams for delivery to the mobile node when the mobile node is away from home. Additionally, the home agent maintains current location information for the mobile node.

The foreign agent serves as a router on a mobile node's visited network which provides routing services to the mobile node while registered. In particular, the foreign agent de-tunnels and delivers datagrams to the mobile node that were tunneled by the mobile node's home agent. For more information on mobile IP refer to (RFC 3220-IP mobility support for IPv4) that is available for download from http://www.ietf.org/rfc/rfc3220.txt.

Whenever a mobile node is subject to a position change that requires attachment to another IP subnet, a continuity of the IP service has to be guaranteed. In the framework of mobile IP, IP service is associated to IP connectivity. Consequently, IP service continuity refers to continuous physical connection of a mobile node to the internet. Even though an IP service continuity might be provided during a handover of a mobile node from one access network to another, an internet service may be discontinuous. An internet service refers to the service that is provided to the mobile node. For example, different kinds of internet services refer to services such as voice over IP (VolP), telephoning, video, etc... Therefore, an IP service continuity does not inherently provide continuity of an internet service.

Upon attachment of a mobile node to a new subnet, a respective new routing path must be prepared to provide similar routing treatment to the respective IP packets as was provided along the old routing path. In particular, when the node is required to re-establish services in a new subnet by the same process as it uses to initially establish them in the old subnet, delay sensitive real time traffic may be seriously impacted. This kind of nomadic use of mobile IP is rather unsatisfactory and is by no means suitable for continuous IP services in the framework of mobile IP.

The concept of context transfer mechanism aims to quickly re-establish an internet service on a new subnet in contrast to establishing an internet service on a mobile node from scratch. Here, a context represents information of the current state of an internet service that is required in order to re-establish the service on a new subnet without exchanging the entire protocol with the mobile node from scratch. This context can be transferred from one router or other network entity to another one as a means of re-establishing specific services on a new subnet or a collection of new subnets. In general, context transfer may be based on a plurality of different services such as Authentication, Authorization and Accounting (AAA), header compression, and Quality of Service (QoS). For further information on context transfer mechanism refer to RFC 3374 that is available for download from
http://www.ietf.org/rfc/rfc3374.txt.

The decision to perform a handover of a mobile node from an old subnet to a new subnet might be based on parameters that describe the type of connection, the user priority and signal strength. In general, a variety of handover criteria can be incorporated with different kinds of handover mechanisms. For example, a mobile node may permanently seek for alternative access networks providing access to the internet. A decision whether to perform a handover to a retrieved access network, i.e. to make use of a retrieved access network, strongly depends on the handover policy. For example, a policy may specify to automatically bind the mobile node to a newly retrieved access network. Alternatively, other policies may establish a list of potential access networks and some others may rely on signal strength criteria. Anyway, handover mechanisms specifying a handover policy for performing of mobile node handover from one access network to another are not clearly standardized.

US 2003/0069018 A1 discloses a method for providing a triggering mechanism in an all-IP wireless communication system. A plurality of communication paths are established and at least one QoS parameter is associated with each path. A handoff trigger is generated to the communication path that provides the highest level of performance to the mobile terminal.

EP 1 207 708 A1 discloses a mobile telecommunications network including an access network portion, a base station, a core network portion and a fixed broadband network. The access network portion is arranged to relay upper layer messages between a mobile terminal and a core network portion over an unlicensed radio interface.

In order to guarantee a given internet service also on a new subnet or access network, the new subnet has to fulfill at least the same QoS for the mobile node than the old subnet. When for example a mobile node is coupled to an internet service and thereby requiring a distinct QoS, performing a handover to a new subnet may not inherently guarantee that the new subnet also provides the required QoS.

As a result, the continuity of a QoS of an internet service may no longer be guaranteed when a handover of the mobile node between sub networks is performed. For example, in commercial available mobile IP networks the decision of performing a handover between sub networks is performed irrespectively of the QoS requirement of an internet service and the QoS properties of the sub networks.

The present invention therefore aims to provide an improved handover mechanism of a mobile node between access networks or sub networks.

### Summary of the invention

The present invention provides a method of enabling of a handover of a mobile node that is coupled to an internet service by means of a first access network. The internet service requires a QoS that is typically provided by a first access network. The inventive method of enabling of the handover comprises the steps of: receiving of QoS information of an at least second access network, comparing of the received QoS information with the QoS of the internet service and enabling the handover of the mobile node from the first access network to the second access network if the second access network provides a QoS required by the internet service.

In this way, it is checked whether a second access network serving as a candidate access network for the handover, provides a sufficient QoS that is required by the internet service. The inventive method of enabling of the handover effectively represents an additional restriction to the handover mechanism. Hence, before a handover is performed, QoS information of all candidate access networks, i.e. the at least second access network, is obtained and compared with the QoS of the internet service. Consequently, it is effectively prevented that a mobile node is attached to an access network that fails to provide a required QoS.

Generally, the QoS-criteria provides an additional criteria for a handover mechanism or a handover policy. It might not represent an exclusive handover criteria but may be well combined with other, arbitrary handover criteria such as e.g. signal strength or cost related criteria. The QoS-criteria effectively serves to prevent an unsuitable handover but it does not enforce a handover if the QoS-criteria is fulfilled.

Prevention of a handover of a mobile node to another access network is generally estabilshed in response to a failure of the QoS-criteria, irrespectively of the number and impact of any other handover criteria that may further contribute to a handover policy.

According to a further preferred embodiment of the invention, the handover from the first to the second access network is disabled if the second access network does not fulfill the QoS requirement of the internet service. Hence, the QoS information obtained from the candidate access networks serves to evaluate an exclusion criterion for candidate access networks that do not provide a required QoS.

According to a further preferred embodiment of the invention, the method further comprises indicating a disabling of a handover to the user of the mobile node. Hence, when none of the at least second access networks is able to provide a required QoS, a sufficient handover of the mobile node from the first access network to the second access network cannot be performed and may therefore not be enabled. By indicating this insufficiency to the final user, the user becomes aware of a potential IP service discontinuity and may autonomously decide whether to accept such an insufficient QoS or to stop moving in order to remain within the coverage of the first access network.

Preferably, a user may overrule a disabling of a handover when the at least second access network does not provide the required QoS. In this way, a handover can still be performed at the expense of the internet service's quality and continuity.

According to a further preferred embodiment of the invention, the QoS information of the at least second access network is received in response to a request of the mobile node. Hence, the mobile node initiates a discovery of access networks that serve as candidates for a handover of the mobile node. Access network discovery can be performed actively or passively. Active access network discovery is based on requesting of QoS information of candidate access networks that are located in the vicinity of the mobile node. Such requests can be initiated by the mobile node on a frequent basis or on demand, e.g. when the signal strength to the first access network tends to drop below a predefined threshold.

Moreover, access network discovery may also be based on passive solicitation and advertisement of candidate access networks. In this case, the candidate access networks regularly transmit information on their momentary QoS. Information on the QoS of the internet service and all candidate access networks is typically encoded by making use of a QoS classification, such as e.g. the 3GPP QoS classes. In this way a plurality of different parameters related to QoS of an access network can be represented by an appropriate class.

Hence, by exchanging and transmitting a class identifier instead of separately transmitting all parameters of a class, QoS information can be effectively exchanged between various access networks and the mobile node. For further information on 3GPP QoS classes refer to "3GPP TS 23.107 third generation partnership project; technical specification group services and system aspect quality of service (Qos) concept and architecture (release 5)", available at http://www.3gpp.org/ftp/specs/archive/23_series/23.107/.

According to a further preferred embodiment of the invention, at least the QoS of the internet service can be stored by means of a repository. The repository may be provided by the mobile node or by any one of the access networks. The repository serves at least to store parameters of the required QoS of the internet service or alternatively to store an identifier of a QoS class. By means of storing the QoS of the internet service, the QoS of the internet service can be easily compared with QoS information of the candidate access networks. Moreover, the repository may also store QoS information of the candidate networks or a selection of candidate networks.

Additionally, the repository may also store QoS information of the first access network that provides coupling of the internet service to the mobile node. Hence, the repository represents an effective means of providing relevant QoS information of the internet service and for providing QoS information of the candidate access networks. Preferably, the data stored in the repository is updated on a regular basis in order to reflect a momentary QoS status of potential future access networks. Moreover, by means of the repository and its regular updating, modifications of the internet service with respect to its QoS requirements can be effectively accounted for.

In another aspect, the invention provides a mobile node for coupling to an internet service by means of a first access network. The internet service typically requires a QoS that is provided by the first access network. The mobile node comprises means for receiving of QoS information of an at least second access network, means for comparing of the QoS information with the QoS of the internet service and means for enabling the handover of the mobile node from the first access network to the second access network. The means for enabling the handover are adapted to enable the handover only if the QoS of the at least second access network provides a QoS that is required by the internet service.

According to a further preferred embodiment of the invention, the mobile node further comprises a repository for storing at least the QoS of the internet service. Preferably, the repository located in the mobile node is adapted to store also QoS information of the at least second access networks, i.e. the candidate access networks. In this way receiving of QoS information, comparing of QoS information, a handover enabling may be entirely performed by the mobile node itself.

In still another aspect, the invention provides an access network for connecting a mobile node to an internet service that requires a QoS. The access network comprises means for receiving of QoS information of an at least second access network, means for comparing of the QoS information with the QoS of the internet service and means for enabling a handover of the mobile node from the access network to the second access network, if the at least second access network provides a QoS that is required by the internet service.

According to a further preferred embodiment of the invention, the access network comprises a repository for storing at least the QoS of the internet service. Preferably, the repository stored in the access network also provides storage of QoS information of the at least second access network, i.e. the candidate access network. In this way the inventive handover mechanism that comprises receiving of QoS information of a plurality of candidate access networks, comparison of the received QoS information with the QoS of the internet service and enabling a handover the mobile node in response to a performed QoS check may be entirely implemented by means of an access network that provides coupling of a mobile node to an internet service.

In still another aspect, the invention provides a computer program product for enabling of a handover of a mobile node that is connected to an internet service by means of a first access network. The internet service requires a QoS and the computer program product comprises computer program means that are adapted for: receiving of QoS information of an at least second access network, comparing of the received QoS information with the QoS of the internet service and enabling the handover of the mobile node from the first access network to the second access network if a QoS of the second access network provides the QoS that is required by the internet service.

### Brief description of the drawings

In the following preferred embodiments of the invention will be described in detail by making reference to the drawings in which:
- Figure 1: shows a block diagram of the mobile node coupled to an internet service by means of the first access network,
- Figure 2: is illustrative of a flowchart of enabling of a handover of the mobile node,
- Figure 3: shows a block diagram of the network architecture wherein a repository for QoS information is provided by means of an access network.

### Detailed description

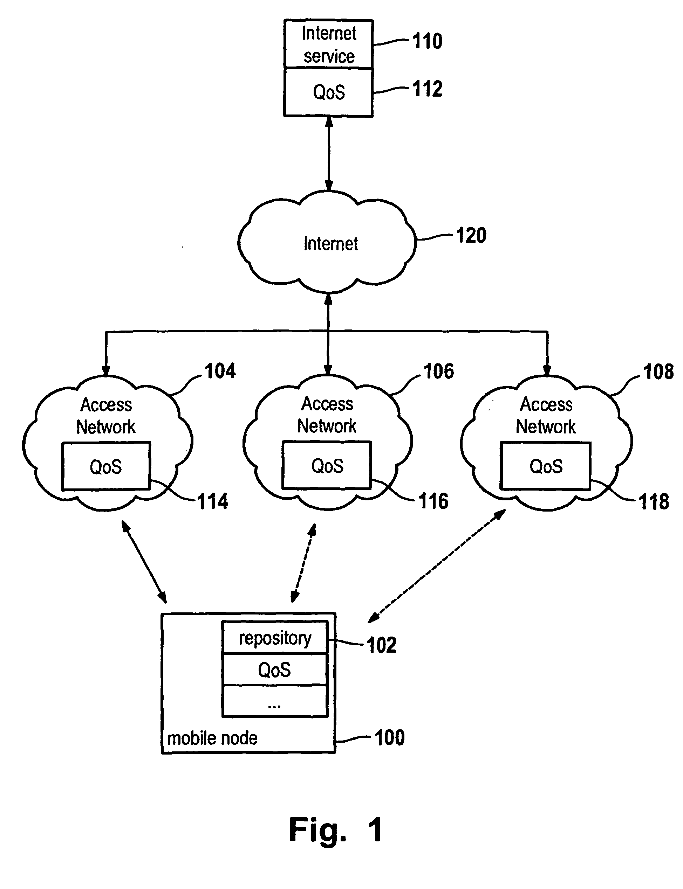

Figure 1 is illustrative of a schematic block diagram, where the mobile node 100 is coupled to an internet service 110 via a first access network 104. The block diagram further illustrates various access networks 104, 106, 108 that are coupled to the internet 120 and serve as sub networks, each of which providing a point of access to the internet and the internet service 110 for the mobile node 100. The internet service 110 may comprise services, such as voice over IP (VolP), telephoning, video, etc... Depending on the concrete type of service, the internet service 110 requires a Quality of Service (QoS) 112. Furthermore, each one of the access networks 104, 106, 108 provides an access network specific QoS 114, 116, 118, respectively. The QoS 114, ... 118 of access networks 104, ... 108 may differ and may substantially deviate from the QoS 112 of the internet service 110.

In the block diagram of figure 1, the mobile node 100 is coupled to the internet service 110 via the access network 104. This coupling is illustrated by the solid arrow. In this case it is guaranteed that the QoS 114 of access network 100 is sufficient for a coupling of the internet service 110. Hence, QoS 114 provides at least the same level of service as QoS 112.

Access networks 106, 108 are illustrated as candidate access networks that may provide coupling of the mobile node 100 to the internet service 110, as illustrated by the dashed arrows. Especially, when the mobile node 100 is subject to movement, the signal strength between access network 104 and the mobile node may drop below an allowable threshold may therefore enforce a handover of the mobile node to one of the candidate access networks 106, 108.

A handover of the mobile node from access network 104 to any one of the other access networks 106, 108 might be performed by making use of a handover mechanism making use of e.g. context transfer. Moreover, as a result of a handover of the mobile node to a new access network or sub network, the mobile node 100 may receive a new care-of address.

In order to guarantee a service continuity of the internet service 110, the inventive method checks whether the QoS 116, 118 of the candidate access networks 106, 108 is sufficient for coupling of the mobile node 100 to the internet service 110 that requires QoS 112. Hence, information of the QoS 116, 118 of the access networks 106, 108 serve as a criterion for the handover mechanism. Consequently, a handover of the mobile node from the access network 104 to any other access network 106, 108 is only enabled if the respective QoS 116, 118 of the candidate networks 106, 108 fulfills the QoS requirements that are specified by QoS 112 of the internet service 110.

In this way, it is effectively prevented that a mobile node 100 that is coupled to an internet service 110 becomes subject to a handover to a new sub network that fails to provide a required QoS of the internet service 110.

The mobile node 100 further comprises a repository 102 that is adapted to store information of the QoS 112 of the internet service 110. Preferably, the QoS 112 is stored by means of a QoS classification or a corresponding QoS classification identifier. By locally storing information of the QoS 112 of the internet service 110 by means of the repository 102 in the mobile node 100, the mobile node 100 itself has information of the required QoS of the internet service 110 to which it is currently coupled. Whenever a handover of the mobile node from access network 104 to any of the candidate access networks 106, 108 becomes necessary, the mobile node 100 can receive information of the QoS 116, 118 of the candidate access networks 106, 108.

Information of the QoS 116, 118, preferably received in form of QoS classifiers or classification identifiers, may then be compared with the stored QoS 112 of the internet service 110. By means of this comparison, it is sufficiently checked whether any of the candidate access networks 106, 108 is sufficient to provide the required QoS 112 of the internet service 110. When for example QoS 116 of access network 106 matches the QoS 112 of the internet service 110, a handover of the mobile node 100 from access network 104 to the access network 106 may be enabled. This enabled handover may then be performed by making use of known handover mechanisms making use of e.g. context transfer.

In the other case, when none of the access networks 106, 108 provides a required QoS 112, a continuity of the internet service 110 can no longer be guaranteed during or after a performed handover. In this case, the mobile node 100 may indicate, that a service discontinuity might occur because of an unavailability of sufficient QoS. Consequently, the user of the mobile node 100 can make a decision whether to accept such a discontinuity of the internet service 110 or to stay within the coverage of the access network 104. At least, the user of the mobile node 100 becomes aware of a lack of QoS even before a service discontinuity may arise. Preferably, the mobile node comprises respective input means in order to process the user's decision.

Exchange of information of QoS 114, 116, 118 may be triggered on request of the mobile node 100 or by means of frequent advertising or solicitation of the access networks 104, 106, 108. Solicitation of QoS information is preferably implemented on a dynamic basis. For example, when the traffic load of any of the access networks 104, ... 108 changes, a resulting change in the QoS availability may be transmitted and advertised. In this way, the method of enabling the handover of the mobile node 100 can effectively account for dynamic changes of the QoS availability of the candidate access networks or candidate sub networks 106, 108.

Moreover, the QoS 112 required by the internet service 110 may be stored by means of the repository 100 in response to a user launching the internet service 110 on the mobile node 100. Also, during runtime of the internet service 110 any modifications of its QoS requirements 112 might be transmitted to the mobile node 100 in order to update the QoS specific data stored by means of the repository 102.

For example, when the mobile node 100 is subject to movement while being attached to the access network 104, the access network 106 might become available for providing a given internet service specifying a QoS. It is then checked whether the newly retrieved access network 106 fulfills the QoS of the internet service. In case the access network 106 fulfills the QoS-criteria, a decision of performing a handover from access network 104 to access network 106 might be determined on the basis of other additional criteria, such as e.g. cost-based criteria or criteria referring to signal strength.

Whenever, the QoS-criteria is fulfilled, the handover is possible with respect to QoS aspects but the handover is not necessarily mandatory. If for example, usage of access network 106 is associated with higher costs, the mobile node will make use of access network 104 as long as possible, i.e. as long as the signal strength of access network 104 is sufficient. For example, a handover to access network 106 may be performed when due to movement of the mobile node access to access network 104 might soon be lost, i.e. the associate signal strength tends to drop below a predefined threshold.

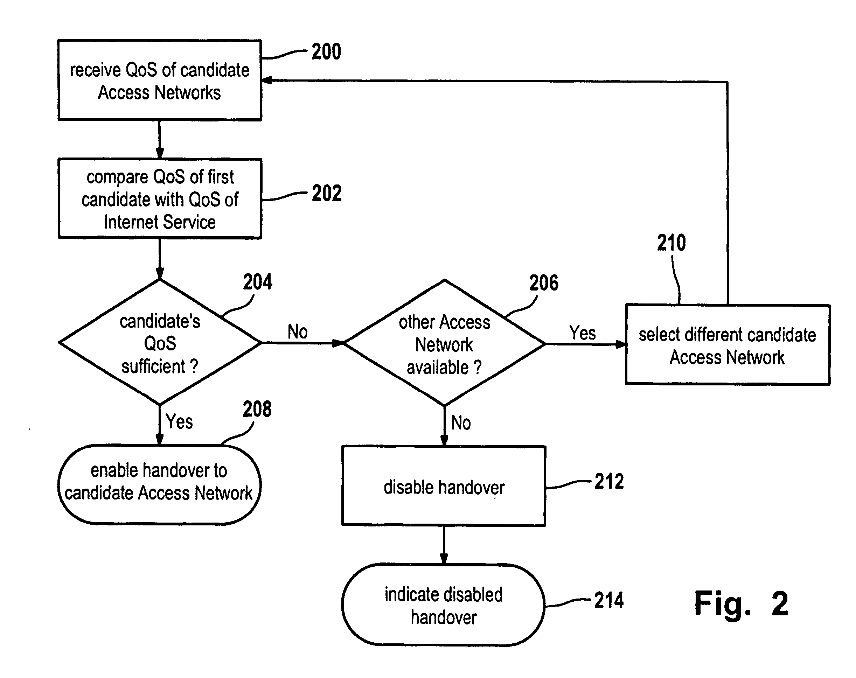

Figure 2 illustrates a flowchart of the inventive method of enabling of a handover of the mobile node 100. In a first step 200 information of the QoS of a candidate access network is received. The QoS information may be transmitted by means of QoS classification and respective identifiers in order to minimize the amount of data that has to be transferred in order to exchange QoS information. These QoS parameters might be transmitted on an active or a passive basis. Active transmission refers to transmitting of QoS parameters upon request and passive transmission describes the case wherein QoS parameters of the candidate access networks are transmitted on a frequent basis or in a continuous mode.

In a subsequent step 202 the QoS of a first candidate access network is compared with the QoS required by the launched internet service. Comparison may refer to comparing of a plurality of parameters that specify the QoS or to a comparison of QoS specific classifiers. In the following step 204, the result of the comparison performed in step 202 is evaluated. It is checked whether the QoS of the selected candidate access network is sufficient for the QoS need of the internet service.

If the QoS of the candidate access network is sufficient for the internet service, the method will continue with step 208, where a handover to the selected candidate access network is enabled. Thereafter, a corresponding handover of the mobile node to the candidate access network may be performed by making use of e.g. a context transfer mechanism.

In the other case, if the QoS of the candidate access network is insufficient for the internet service and does not guarantee a service continuity, the method will continue with step 206. In this step 206 it is checked whether another access network is available for performing the handover of the mobile node. When in step 206 another access network is available, the method continues with step 210 where this access network becomes a candidate access network for a potential handover of the mobile node. Consequently, in step 210 the available access network is selected as a candidate access network. Thereafter, the method returns to step 200, where QoS information of the newly selected candidate access network is received.

In the case that in step 206 no other access network is available that might sufficiently perform the handover of the mobile node, a handover of the mobile node is disabled in step 212. Consequently, such a disabled handover is finally indicated to the user in the last step 214. Alternatively to a disabling of a handover in step 212 a potential service discontinuity might be indicated to the user of the final node without the necessity to disable the handover. The user may then autonomously specify whether to deny a handover, to perform a handover at the expense of a potential service discontinuity or to remain within a coverage of the current access network.

Moreover, it is to be pointed out that the method illustrated in the flowchart of figure 2 can be universally implemented by means of a mobile node or alternatively by means of an access network to which the mobile node is currently attached.

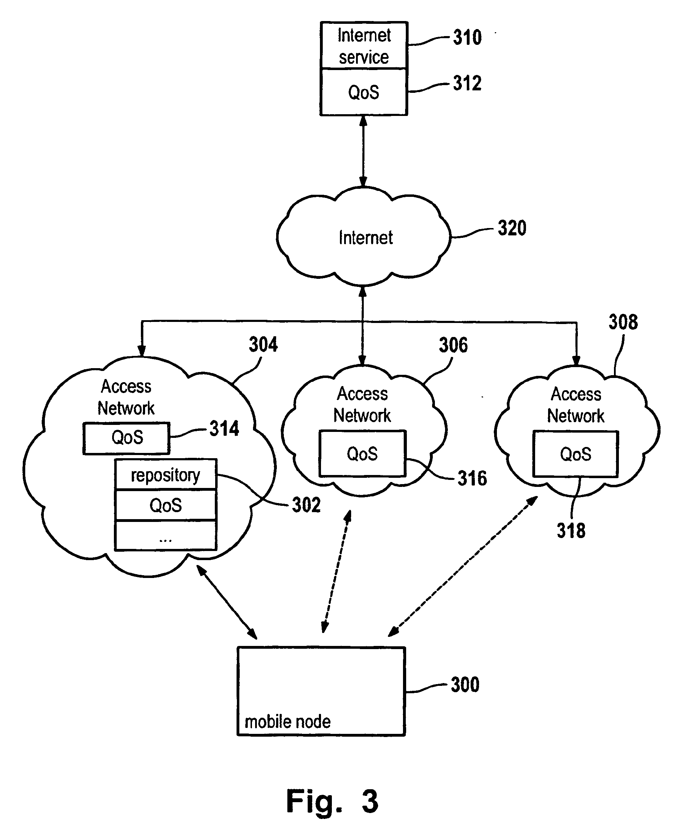

Figure 3 shows a block diagram of the mobile node 300 that is coupled to an internet service 310 via the access network 304. Generally, the block diagram of figure 3 corresponds to the block diagram of figure 1 except that the repository 102 of figure 1 is stored by means of the access network 304. Reference numerals of figure 1 correspond to reference numerals of figure 3 and differ by the number 200.

When in figure 3 the mobile node 300 launches an internet service 310 requiring a QoS 312, a respective entry is made into repository 302 located in the access network 304 that provides attachment of the mobile node 300 to the internet 320 and to the specific internet service 310. Here, the inventive method of incorporating a QoS criterion into a handover mechanism is performed by means of the access network 304. When for example a handover of the mobile node 300 to any of the candidate access networks 306, 308 becomes necessary, respective QoS information of the access networks 306, 308 is transmitted to the access network 304. There, QoS parameters of QoS 316, 318 are compared with the stored QoS 312. Whenever any of the QoS 316, 318 is sufficient to provide service continuity of the internet service 310, the handover of the mobile node to the respective access network 306, 308 is enabled and may be subsequently performed.

Hence,the inventive method of incorporating QoS criteria into a handover mechanism for mobile IP improves the general reliability and service continuity of a handover mechanism.

### LIST OF REFERENCE NUMERALS

- 100: mobile node
- 102: repository
- 104: Access Network
- 106: Access Network
- 108: Access Network
- 110: Internet Service
- 112: Quality of Service (QoS)
- 114: Quality of Service
- 116: Quality of Service
- 118: Quality of Service
- 120: Internet
- 300: mobile node
- 302: repository
- 304: Access Network
- 306: Access Network
- 308: Access Network
- 310: Internet Service
- 312: Quality of Service
- 314: Quality of Service
- 316: Quality of Service
- 318: Quality of Service
- 320: Internet

## Claims

1. A method of enabling of a handover of a mobile node (100; 300) being coupled to an internet service (110; 310) by means of a first access network (104), the internet service requiring a Quality of Service (112; 312) being provided by the first access network, the method comprising the steps of:
- receiving of Quality of Service (116, 118; 316, 318) information of an at least second access network (106, 108; 306, 308),
- comparing of the Quality of Service (116, 118; 316, 318) information with the Quality of Service (112; 312) of the internet service,
- enabling the handover of the mobile node from the first access network to the second access network (106, 108; 308, 306, 308) if the at least second access network provides a Quality of Service (116,118; 316, 318) required by the internet service (110; 310),
- disabling the handover from the first (104; 304) to the second (106, 108; 306, 308) access network if the second access network does not fulfill the Quality of Service (112; 312) requirement of the internet service (110; 310),
- indicating a disabling of a handover to the user of the mobile node (100; 300),
- overruling the disabling of the handover from the first (104; 304) to the second (106, 108; 306, 308) access network if the user of the mobile node specifies to overrule the disabling of the handover.

2. The method according to claim 1, wherein Quality of Service (116, 118; 316, 318) information of the at least second access network is received in response to a request of the mobile node (100; 300).

3. The method according to claim 1, wherein the Quality of Service (112; 312) of the internet service (110; 310) is stored by means of a repository (102; 302).

4. A mobile node (100; 300) for coupling to an internet service (110; 310) by means of a first access network (104; 304), the internet service requiring a Quality of Service (112; 312) being provided by the first access network, the mobile node comprising:
- means for receiving of Quality of Service (116, 118; 316, 318) information of an at least second access network (106, 108; 306, 308) ,
- means for comparing of the Quality of Service information with the Quality of Service of the internet service,
- means for enabling the handover of the mobile node (100; 300) from the first (104) access network to the second access network (106, 108; 306, 308) if the Quality of Service of the at least second access network provides a Quality of Service required by the internet service (110; 310),
- means for disabling the handover from the first (104; 304) to the second (106, 108; 306, 308) access network if the second access network does not fulfill the Quality of Service (112; 312) requirement of the internet service (110; 310),
- means for indicating a disabling of a handover to the user of the mobile node (100; 300),
- means for overruling the disabling of the handover from the first (104; 304) to the second (106, 108; 306, 308) access network if the user of the mobile node specifies to overrule the disabling of the handover.

5. The mobile node (100; 300) according to claim 4, further comprising a repository (102; 302) for storing at least the Quality of Service (112; 312) of the internet service (110; 310).

6. An access network (104; 304) for coupling a mobile node (100; 300) to an internet service (110; 310) requiring a Quality of Service (112; 312), the access network comprising:
- means for receiving of.Quality of Service information of an at least second access network (106, 108; 306, 308),
- means for comparing of the Quality of Service information with the Quality of Service of the internet service,
- means for enabling a handover of the mobile node (100; 300) from the access network (104; 304) to the second access network (106, 108; 306, 308) if the at least second access network provides a Quality of Service required by the internet service (110; 310),
- means for disabling the handover from the first (104; 304) to the second (106, 108; 306, 308) access network if the second access network does not fulfill the Quality of Service (112; 312) requirement of the internet service (110; 310),
- means for indicating a disabling of a handover to the user of the mobile node (100; 300),
- means for overruling the disabling of the handover from the first (104; 304) to the second (106, 108; 306, 308) access network if the user of the mobile node specifies to overrule the disabling of the handover.

7. The access network (104; 304) according to claim 6, further comprising a repository (102; 302) for storing at least the Quality of Service (112; 312) of the internet service (110; 310).

8. A computer program product for enabling of a handover of a mobile node (100; 300) being adapted to be coupled to an internet service by means of a first access network (104; 304), the internet service (110; 310) requiring a Quality of Service (112; 312), the computer program product comprising computer program means being adapted for:
- receiving of Quality of Service (116, 118; 316, 318) information of an at least second access network (104, 106; 304, 306),
- comparing of the Quality of Service information with the Quality of Service of the internet service,
- enabling the handover of the mobile node (100; 300) from the first access network (104; 304) to the second access network (106, 108; 306, 308) if a Quality of Service of the at least second access network provides the Quality of Service (112; 312) required by the internet service (110; 310),
- disabling the handover from the first (104; 304) to the second (106, 108; 306, 308) access network if the second access network does not fulfill the Quality of Service (112; 312) requirement of the internet service (110; 310),
- indicating a disabling of a handover to the user of the mobile node (100; 300),
- overruling the disabling of the handover from the first (104; 304) to the second (106, 108; 306, 308) access network if the user of the mobile node specifies to overrule the disabling of the handover.

## Patentansprüche

1. Ein Verfahren zum Durchführen eines Handovers eines mobilen Knotens (100; 300), welcher über ein erstes Zugangsnetzwerk (104) an einen Internet-Dienst (110; 310) gekoppelt ist, wobei der Internet-Dienst eine Dienstgüte (112; 312) fordert, welche von dem ersten Zugangsnetzwerk bereitgestellt wird, wobei das Verfahren die folgenden Schritte umfasst:
- Empfangen einer Information über die Dienstgüte (116, 118; 316, 318) mindestens eines zweiten Zugangsnetzwerks (106, 108; 306, 308),
- Vergleichen der Information über die Dienstgüte (116, 118; 316, 318) mit der Dienstgüte (112; 312) des Internet-Dienstes,
- Durchführen des Handovers des mobilen Knotens von dem ersten Zugangsnetzwerk an das zweite Zugangsnetzwerk (106, 108; 306, 308), wenn das mindestens zweite Zugangsnetzwerk eine von dem Internet-Dienst (110; 310) geforderte Dienstgüte (116, 118; 316, 318) bereitstellt,
- Sperren des Handovers von dem ersten (104; 304) an das zweite (106, 108; 306, 308) Zugangsnetzwerk, wenn das zweite Zugangsnetzwerk die von dem Internet-Dienst (110; 310) geforderte Dienstgüte (112; 312) nicht erfüllt,
- Anzeigen der Sperrung eines Handovers an den Benutzer des mobilen Knotens (100; 300),
- Aufheben der Sperrung eines Handovers von dem ersten (104; 304) an das zweite (106, 108; 306, 308) Zugangsnetzwerk, wenn der Benutzer des mobilen Knotens befiehlt, die Sperrung des Handovers aufzuheben.

2. Das Verfahren nach Anspruch 1, wobei die Information über die Dienstgüte (116, 118; 316, 318) des mindestens zweiten Zugangsnetzwerks in Antwort auf eine Anforderung des mobilen Knotens (100; 300) empfangen wird.

3. Das Verfahren nach Anspruch 1, wobei die Dienstgüte (112; 312) des Internet-Dienstes (110; 310) in einem Datenbehälter (102; 302) gespeichert wird.

4. Ein mobiler Knoten (100; 300) zum Ankoppeln an einen Internet-Dienst (110; 310) über ein erstes Zugangsnetzwerk (104; 304), wobei der Internet-Dienst eine Dienstgüte (112; 312) fordert, welche von dem ersten Zugangsnetzwerk bereitgestellt wird, wobei der mobile Knoten umfasst:
- Mittel zum Empfangen einer Information über die Dienstgüte (116, 118; 316, 318) mindestens eines zweiten Zugangsnetzwerks (106, 108; 306, 308),
- Mittel zum Vergleichen der Information über die Dienstgüte mit der Dienstgüte des Internet-Dienstes,
- Mittel zum Durchführen des Handovers des mobilen Knotens (100; 300) von dem ersten (104) Zugangsnetzwerk an das zweite Zugangsnetzwerk (106, 108; 306, 308), wenn die Dienstgüte des mindestens zweiten Zugangsnetzwerks einer von dem Internet-Dienst (110; 310) geforderten Dienstgüte bereitstellt,
- Mittel zum Sperren des Handovers von dem ersten (104; 304) an das zweite (106, 108; 306, 308) Zugangsnetzwerk, wenn das zweite Zugangsnetzwerk die von dem Internet-Dienst (110; 310) geforderte Dienstgüte (112; 312) nicht erfüllt,
- Mittel zum Anzeigen der Sperrung eines Handovers an den Benutzer des mobilen Knotens (100; 300),
- Mittel zum Aufheben der Sperrung eines Handovers von dem ersten (104; 304) an das zweite (106, 108; 306, 308) Zugangsnetzwerk, wenn der Benutzer des mobilen Knotens befiehlt, die Sperrung des Handovers aufzuheben.

5. Der mobile Knoten (100; 300) nach Anspruch 4, weiterhin umfassend einen Datenbehälter (102; 302) zum Speichern von mindestens der Dienstgüte (112; 312) des Internet-Dienstes (110; 310).

6. Ein Zugangsnetzwerk (104; 304) zum Koppeln eines mobilen Knotens (100; 300) an einen Internet-Dienst (110; 310), welcher eine Dienstgüte (112; 312) fordert, wobei das Zugangsnetz umfasst:
- Mittel zum Empfangen einer Information über die Dienstgüte mindestens eines zweiten Zugangsnetzwerks (106, 108; 306, 308),
- Mittel zum Vergleichen der Information über die Dienstgüte mit der Dienstgüte des Internet-Dienstes,
- Mittel zum Durchführen eines Handovers des mobilen Knotens (100; 300) von dem Zugangsnetzwerk (104; 304) an das zweite Zugangsnetzwerk (106, 108; 306, 308), wenn das mindestens zweite Zugangsnetzwerk eine von dem Internet-Dienst (110; 310) geforderte Dienstgüte bereitstellt,
- Mittel zum Sperren des Handovers von dem ersten (104; 304) an das zweite (106, 108; 306, 308) Zugangsnetzwerk, wenn das zweite Zugangsnetzwerk die von dem Internet-Dienst (110; 310) geforderte Dienstgüte (112; 312) nicht erfüllt,
- Mittel zum Anzeigen der Sperrung eines Handovers an den Benutzer des mobilen Knotens (100; 300),
- Mittel zum Aufheben der Sperrung des Handovers von dem ersten (104; 304) an das zweite (106, 108; 306, 308) Zugangsnetzwerk, wenn der Benutzer des mobilen Knotens befiehlt, die Sperrung des Handovers aufzuheben.

7. Das Zugangsnetzwerk (104; 304) nach Anspruch 6, weiterhin umfassend einen Datenbehälter (102; 302) zum Speichern von mindestens der Dienstgüte (112; 312) des Internet-Dienstes (110; 310).

8. Ein Computerprogramm-Produkt zum Durchführen eines Handovers eines mobilen Knotens (100; 300), dazu bestimmt, über ein erstes Zugangsnetzwerk (104; 304) an einen Internet-Dienst gekoppelt zu werden, wobei der Internt-Dienst (110; 310) eine Dienstgüte (112; 312) fordert, wobei das Computerprogramm-Produkt Mittel umfasst, welche für das Ausführen der folgenden Schritte ausgelegt sind:
- Empfangen einer Information über die Dienstgüte (116, 118; 316, 318) mindestens eines zweiten Zugangsnetzwerks (104, 106; 304, 306),
- Vergleichen der Information über die Dienstgüte mit der Dienstgüte des Internet-Dienstes,
- Durchführen des Handovers des mobilen Knotens (100; 300) von dem ersten Zugangsnetzwerk (104; 304) an das zweite Zugangsnetzwerk (106, 108; 306, 308), wenn eine Dienstgüte des mindestens zweiten Zugangsnetzwerks die von dem Internet-Dienst (110; 310) geforderte Dienstgüte (112; 312) bereitstellt,
- Sperren des Handovers von dem ersten (104; 304) an das zweite (106, 108; 306, 308) Zugangsnetzwerk, wenn das zweite Zugangsnetzwerk die von dem Internet-Dienst (110; 310) geforderte Dienstgüte (112; 312) nicht erfüllt,
- Anzeigen der Sperrung eines Handovers an den Benutzer des mobilen Knotens (100; 300),
- Aufheben der Sperrung des Handovers von dem ersten (104; 304) an das zweite (106, 108; 306, 308) Zugangsnetzwerk, wenn der Benutzer des mobilen Knotens befiehlt, die Sperrung des Handovers aufzuheben.

## Revendications

1. Procédé d'activation d'un transfert d'un noeud mobile (100 ; 300) couplé à un service internet (110 ; 310) au moyen d'un premier réseau d'accès (104), le service internet demandant une qualité de service (112 ; 312) fournie par le premier réseau d'accès, le procédé comprenant les étapes suivantes :
- réception d'une information de qualité de service (116, 118 ; 316, 318) d'au moins un second réseau d'accès (106, 108 ; 306, 308),
- comparaison de l'information de qualité de service (116, 118 ; 316, 318) avec la qualité de service (112 ; 312) du service internet,
- activation du transfert du noeud mobile du premier réseau d'accès au second réseau d'accès (106, 108 ; 308, 306, 308) si le au moins un second réseau d'accès fournit une qualité de service (116, 118 ; 316, 318) demandée par le service internet (110 ; 310),
- désactivation du transfert du premier (104 ; 304) au second (106, 108 ; 306, 308) réseau d'accès si le second réseau d'accès ne satisfait pas à la demande de qualité de service (112 ; 312) du service internet (110 ; 310),
- indication d'une désactivation d'un transfert à l'utilisateur du noeud mobile (100 ; 300),
- annulation de la désactivation du transfert du premier (104 ; 304) au second (106, 108 ; 306, 308) réseau d'accès si l'utilisateur du noeud mobile spécifie l'annulation de la désactivation du transfert.

2. Procédé selon la revendication 1, dans lequel l'information de qualité de service (116, 118 ; 316, 318) du au moins un second réseau d'accès est reçue en réponse à une demande du noeud mobile (100 ; 300).

3. Procédé selon la revendication 1, dans lequel la qualité de service (112 ; 312) du service internet (110 ; 310) est stockée au moyen d'un référentiel (102 ; 302).

4. Noeud mobile (100 ; 300) destiné à un couplage avec un service internet (110 ; 310) au moyen d'un premier réseau d'accès (104 ; 304), le service internet demandant une qualité de service (112 ; 312) fournie par le premier réseau d'accès, le noeud mobile comprenant :
- moyens pour recevoir une information de qualité de service (116, 118 ; 316, 318) d'au moins un second réseau d'accès (106, 108 ; 306, 308),
- moyens pour comparer l'information de qualité de service avec la qualité de service du service internet,
- moyens pour activer le transfert du noeud mobile (100 ; 300) du premier réseau d'accès (104) au second réseau d'accès (106, 108 ; 306, 308) si la qualité de service du au moins un second réseau d'accès fournit une qualité de service demandée par le service internet (110 ; 310),
- moyens pour désactiver le transfert du premier (104 ; 304) au second (106, 108 ; 306, 308) réseau d'accès si le second réseau d'accès ne satisfait pas à la demande de qualité de service (112 ; 312) du service internet (110 ; 310),
- moyens pour indiquer une désactivation d'un transfert à l'utilisateur du noeud mobile (100 ; 300),
- moyens pour annuler la désactivation du transfert du premier (104 ; 304) au second (106, 108 ; 306, 308) réseau d'accès si l'utilisateur du noeud mobile spécifie l'annulation de la désactivation du transfert.

5. Noeud mobile (100 ; 300) selon la revendication 4, comprenant en outre un référentiel (102 ; 302) pour stocker au moins la qualité de service (112 ; 312) du service internet (110 ; 310).

6. Réseau d'accès (104 ; 304) pour coupler un noeud mobile (100 ; 300) à un service internet (110 ; 310) demandant une qualité de service (112 ; 312), le réseau d'accès comprenant :
- moyens pour recevoir une information de qualité de service d'au moins un second réseau d'accès (106, 108 ; 306, 308),
- moyens pour comparer l'information de qualité de service avec la qualité de service du service internet,
- moyens pour activer un transfert du noeud mobile (100 ; 300) du premier réseau d'accès (104, 304) au second réseau d'accès (106, 108 ; 306, 308) si le au moins un second réseau d'accès fournit une qualité de service demandée par le service internet (110 ; 310),
- moyens pour désactiver le transfert du premier (104 ; 304) au second (106, 108 ; 306, 308) réseau d'accès si le second réseau d'accès ne satisfait pas à la demande de qualité de service (112 ; 312) du service internet (110 ; 310),
- moyens pour indiquer une désactivation d'un transfert à l'utilisateur du noeud mobile (100 ; 300),
- moyens pour annuler la désactivation du transfert du premier (104 ; 304) au second (106, 108 ; 306, 308) réseau d'accès si l'utilisateur du noeud mobile spécifie l'annulation de la désactivation du transfert.

7. Réseau d'accès (104 ; 304) selon la revendication 6, comprenant en outre un référentiel (102 ; 302) pour stocker au moins la qualité de service (112 ; 312) du service internet (110 ; 310).

8. Produit de programme informatique pour activer un transfert d'un noeud mobile (100 ; 300) adapté pour un couplage avec un service internet au moyen d'un premier réseau d'accès (104 ; 304), le service internet (110 ; 310) demandant une qualité de service (112 ; 312), le produit de programme informatique comprenant des moyens de programme informatique adaptés pour :
- recevoir une information de qualité de service (116, 118 ; 316, 318) d'au moins un second réseau d'accès (104, 106 ; 304, 306),
- comparer l'information de qualité de service avec la qualité de service du service internet,
- activer le transfert du noeud mobile (100 ; 300) du premier réseau d'accès (104 ; 304) au second réseau d'accès (106, 108 ; 306, 308) si une qualité de service du au moins un second réseau d'accès fournit la qualité de service (112 ; 312) demandée par le service internet (110 ; 310),
- désactiver le transfert du premier (104 ; 304) au second (106, 108 ; 306, 308) réseau d'accès si le second réseau d'accès ne satisfait pas à la demande de qualité de service (112 ; 312) du service internet (110 ; 310),
- indiquer une désactivation d'un transfert à l'utilisateur du noeud mobile (100 ; 300),
- annuler la désactivation du transfert du premier (104 ; 304) au second (106, 108 ; 306, 308) réseau d'accès si l'utilisateur du noeud mobile spécifie l'annulation de la désactivation du transfert.
